# EUROPEAN PATENT SPECIFICATION

(11) **EP 2 790 061 B1**
(45) Date of publication and mention of the grant of the patent: **10.02.2016**
(21) Application number: 12855147.0
(22) Date of filing: 01.11.2012
(51) Int. Cl.: G03G 15/08, C08K 3/04, C08L 83/05, C08L 83/07, G03G 21/18, C09D 183/04

(54) **CONDUCTIVE MEMBER, PROCESS CARTRIDGE, AND ELECTROPHOTOGRAPHIC APPARATUS**
LEITFÄHIGES ELEMENT, PROZESSKARTUSCHE UND ELEKTROFOTOGRAFISCHE VORRICHTUNG
ÉLÉMENT CONDUCTEUR, CARTOUCHE DE TRAITEMENT ET APPAREIL ÉLECTROPHOTOGRAPHIQUE

(30) Priority: 09.12.2011 JP 2011270739
(43) Date of publication of application: 15.10.2014
(73) Proprietor: Canon Kabushiki Kaisha, Tokyo 146-8501 (JP)
(72) Inventor: SUGIYAMA, Ryo, Tokyo 146-8501 (JP); KUSABA, Takashi, Tokyo 146-8501 (JP); URUSHIHARA, Shohei, Tokyo 146-8501 (JP); UNO, Masashi, Tokyo 146-8501 (JP)
(74) Representative: TBK
(86) International application number: PCT/JP2012/007014
(87) International publication number: WO 2013/084404

(56) References cited:
- JP-A- 2001 234 070
- JP-A- 2003 055 554
- JP-A- 2005 113 031
- JP-A- 2005 249 851
- JP-A- 2007 063 388
- JP-A- 2007 063 389
- JP-A- 2011 107 262
- US-A1- 2010 046 989
- US-A1- 2011 094 403

## Description

### Technical Field

The present invention relates to an electro-conductive member that can be used in a developing member or the like in an electrophotographic apparatus, and a process cartridge and an electrophotographic apparatus.

### Background Art

A developing member serves to convey toner in a toner container to a photosensitive member, and to develop an image on the surface of the photosensitive member with the toner with the aid of a development field formed between the developing member and the photosensitive member. At that time, the opposite charge of the charged toner flows into the surface of the developing member due to a bias applied to a developing blade as a toner regulating member. As such charge attenuates in a short time period, even when the charge temporarily remains on the surface of the developing member, the charge is alleviated until the charge reaches the position at which the developing member is close to the photosensitive member, i.e., a development position, and hence the charge has nearly no influence on the development field.

However, in association with a recent increase in process speed of an electrophotographic apparatus, an increase in rotational speed of the developing member has started to be required. In this case, a time period commencing on the flow of the charge into the surface of the developing member and ending on its arrival at the development position shortens. Accordingly, on occasions, a sufficient time period to alleviate the charge on the surface of the developing member is not obtained and hence the charge remains on the surface. As a result, the residual charge on the surface of the developing member sometimes affects the development field and hence appears as the light and shade of an image upon formation of the image. Accordingly, a technology for reducing the unevenness of the residual charge on the surface of the developing member has become important.

By the way, the state of residual charge on the surface of a developing member having an electro-conductive elastic layer formed of a silicone rubber mixture obtained by dispersing carbon black depends on the dispersed state of the carbon black in the elastic layer. Accordingly, in order that the residual state of the charge on the surface of such developing member may be uniformed, the uniformity of the dispersed state of the carbon black in each of the surface and inside of the developing member is important.

To solve such problem, Patent Literature 1 discloses that an electro-conductive roll provided with a silicone rubber layer showing a small variation in volume resistivity is obtained as described below. A blend containing an alkenyl group-containing polyorganosiloxane having, in a molecule thereof, two or more alkenyl groups and having a viscosity at a temperature of 23°C of 0.1 to 300 Pa·s, and electro-conductive carbon black is kneaded so that its plasticity at a temperature of 23°C may be 100 to 1,000. The alkenyl group-containing polyorganosiloxane is further blended into the kneaded product to form a liquid, electro-conductive silicone rubber mixture having an apparent viscosity at a temperature of 23°C of 1 to 1,000 Pa·s. Then, a cured substance of the mixture is wound around the periphery of a cored bar and cured.

Also the document US 2010/0046989 A1 discloses an electro-conducting member comprising a substrate having an electro-conductive surface and an electro-conductive elastic layer provided thereon, wherein the elastic layer is obtained by curing a mixture containing an organopolysiloxane having two vinyl groups bonded to a silicon atom; a hydrogen polysiloxane having at least two hydrosilyl groups; and carbon black.

### Citation List

### Patent Literature

PTL **1:** Japanese Patent Application Laid-Open No. 2005-113031

### Summary of Invention

### Technical Problem

However, it has been acknowledged by an investigation conducted by the inventors of the present invention that the electro-conductive silicone rubber mixture obtained by the method according to Patent Literature 1 still needs to be improved in terms of the dispersed state of the carbon black in the silicone rubber.

In view of the foregoing, the present invention is directed to providing an electro-conductive member showing small unevenness of the residual state of charge. Further, the present invention is directed to providing a process cartridge and an electrophotographic apparatus capable of providing high-quality electrophotographic images.

### Solution to Problem

According to one aspect of the present invention, there is provided an electro-conductive member, comprising: a substrate having an electro-conductive surface; and an electro-conductive elastic layer provided on the substrate, wherein the elastic layer is obtained by curing a mixture containing the following (A) to (D):
(A) an organopolysiloxane having two vinyl groups bonded to a silicon atom;
(B) an organopolysiloxane represented by the following chemical structural formula (1): 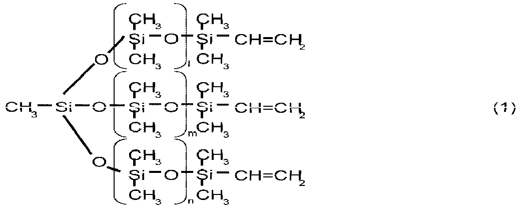 l, m, and n in the chemical structural formula (1) each independently represent a positive integer;
(C) a hydrogen polysiloxane having at least two hydrosilyl groups; and
(D) carbon black.

### Advantageous Effects of Invention

According to the present invention, there is provided the electro-conductive member which suppresses the occurrence of the unevenness of an electrophotographic image resulting from the unevenness of the residual state of the charge on an elastic layer. Further, according to the present invention, provided is the process cartridge and the electrophotographic apparatus capable of providing high-quality electrophotographic images.

### Brief Description of Drawings

FIG. 1 is a sectional view perpendicular to the longitudinal direction of a developing roller according to the present invention.
FIG. 2 is a sectional view of an electrophotographic process cartridge according to the present invention.
FIG. 3 is a sectional view of an electrophotographic apparatus according to the present invention.

### Description of Embodiments

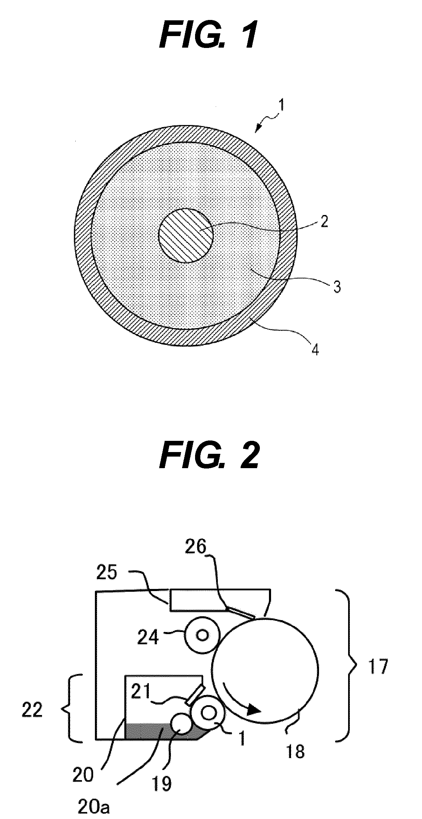

FIG. 1 is a sectional view perpendicular to the longitudinal direction of a developing roller 1 according to an embodiment of an electro-conductive member according to the present invention. The developing roller 1 has: a columnar or hollow cylindrical, electro-conductive mandrel 2 as a substrate whose surface is electro-conductive; and an elastic layer 3 formed on the periphery of the mandrel. The developing roller 1 may further have a layer such as a surface layer 4 provided on the outer periphery of the elastic layer 3.

Hereinafter, the developing roller 1 of FIG. 1 is described in detail.

### <Elastic layer 3>

The elastic layer 3 is formed by curing a mixture containing the following (A) to (D):
(A) an organopolysiloxane having two vinyl groups bonded to a silicon atom;
(B) an organopolysiloxane represented by the following chemical structural formula (1): 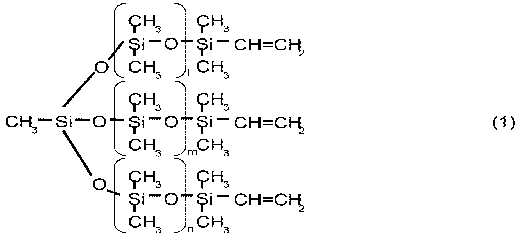 (l, m, and n in the chemical structural formula (1) each independently represent a positive integer);
(C) a hydrogen polysiloxane having at least two hydrosilyl groups; and
(D) carbon black.

The inventors of the present invention have found that the unevenness of the remaining of charge on the surface of the elastic layer 3 constituted of the cured substance of the mixture containing the (A) to (D) reduces. Although the reason for the foregoing is unclear, that may be because the structure of the molecular chain of the cured substance is a structure that suppresses the movement of the carbon black well.

The reason why the movement of the carbon black is suppressed in a curing process for the mixture containing the components (A) to (D) is considered to be as described below.

That is, the following assumption is made. As represented by the chemical structural formula (1), the organopolysiloxane as the component (B) has one silicon atom of an SiO_{3/2} unit. In addition, the organopolysiloxane has one alkenyl group at each of the terminals of three linear dimethylsiloxane chains branching off the silicon atom. Therefore, when the mixture cures, the component (A) and the organopolysiloxane as the component (B) are linked to the tip of each of the molecular chains branching at a wide angle off the silicon atom of the SiO_{3/2} unit through the hydrogen polysiloxane as the component (C). Thus, in the curing process, a molecular chain of a silicone rubber stretches while spreading at a wide angle as compared with the linear organopolysiloxane. Accordingly, a force resulting from the unevenness of a curing rate is hardly applied to the carbon black. As a result, the movement of the carbon black in the curing process for the silicone rubber mixture is suppressed and hence the elastic layer in which the carbon black is present while being uniformly dispersed is obtained.

Further, according to the present invention, the unevenness of the presence of the carbon black was able to be suppressed even in the surface of the elastic layer particularly susceptible to external influences such as temperature unevenness and flow rate unevenness at the time of the curing.

The organopolysiloxane is constituted of: a main chain constituted of a silicon-oxygen bond having high ionicity and a strong cohesive force; and a side chain of an organic group that is nonionic and has a weak cohesive force. Accordingly, at an interface between the organopolysiloxane and any other material such as a metal, the main chain having high ionicity is oriented toward the interface to form a hydrogen bond.

Therefore, in the case of the organopolysiloxane as the component (B) of the present invention, at its interface with the other material such as a metal, the main chains of the three molecular chains bonded to the silicon atom of the SiO_{3/2} unit adsorb to the interface. As described above, the three molecular chains which the component (B) has are present in the same plane at the interface. Accordingly, it is assumed that the spreading of the molecular chains of the component (B) at the interface becomes particularly large as compared with that in the elastic layer. Probably as a result of the foregoing, even in the surface of the elastic layer susceptible to various external influences at the time of the curing, the movement of the carbon black was suppressed and hence the unevenness of its presence was suppressed.

### <Component (A)>

The organopolysiloxane as the component (A) to be used in the present invention has, in a molecule thereof,
two vinyl groups bonded to a silicon atom. A general formula (2) for the component (A) is shown below.

R¹ₐSiO_{(4-a)/2} ··· (2)

In the general formula (2), a represents a positive number in the range of 1.5 or more and 2.8 or less. In addition, two of R¹'s represent vinyl groups and the other R¹'s represent the same kind or different kinds, of unsubstituted or substituted, monovalent hydrocarbon group free of any aliphatic, unsaturated carbon-carbon bond.

In addition, the skeleton of the organopolysiloxane as the component (A), which may be linear or branched, is preferably linear in order that excellent mechanical characteristics including a low compression set which the electro-conductive member is required to have may be imparted.

In the organopolysiloxane as the component (A), the vinyl groups may be present somewhere along its molecular chain or may be present at the terminals of the molecular chain. The vinyl groups are preferably present at both terminals of the molecular chain because reactivity in the curing process and the mechanical characteristics of the composition are excellent.

Examples of R¹ other than the vinyl group include alkyl groups such as a methyl group, an ethyl group, a propyl group, a butyl group, a pentyl group, and a hexyl group, cycloalkyl groups such as a cyclohexyl group, aryl groups such as a phenyl group, aralkyl groups such as a 2-phenylethyl group and a 2-phenylpropyl group, and substituted hydrocarbon groups such as a chloromethyl group, a chlorophenyl group, a 3-cyanopropyl group, and a 3,3,3-trifluoropropyl group. Of those, from the viewpoint of forming a stable molecular chain and suppressing steric hindrance of an organic group, a methyl group is preferred.

The organopolysiloxane as the component (A) preferably has a viscosity at a temperature of 25°C of 1 Pa·s or more and 500 Pa·s or less. As typified by Barry's equation in dimethylpolysiloxane, a correlation is observed between the viscosity of the organopolysiloxane and its molecular weight. In the case of a both-terminals-vinyl-group-capping dimethylpolysiloxane as a typical example of the organopolysiloxane as the component (A), its molecular weight in the viscosity range is about 30,000 or more and 150,000 or less. The molecular weight corresponds to a degree of polymerization of dimethylsiloxane of about 400 or more and 2,000 or less. In addition, the organopolysiloxane has a silicon-oxygen bond having a length of 1.64 Å and adopts a helical structure. Setting the viscosity of the component (A) as such organopolysiloxane to 1 Pa·s or more allows the carbon black to stably exist with ease when the component is stretched by being linked to the component (B) and the component (C). In addition, setting the viscosity to 500 Pa·s or less enables efficient molding of the component as a liquid silicone. One kind of the components (A) may be used, or two or more kinds thereof may be used as a mixture. A viscosity when two or more kinds thereof are mixed refers to the viscosity of the components (A) in a mixed state. It should be noted that the viscosity in the present invention can be measured with a Brookfield viscometer or the like.

### <Component (B)>

The organopolysiloxane as the component (B) is an organopolysiloxane represented by the chemical structural formula (1). As described above, when the mixture is cured, the movement of the carbon black can be suppressed by virtue of the presence of the molecular chains which the component (B) has, the molecular chains branching at a wide angle and having vinyl groups at their respective tips, and the suppression largely contributes to the suppression of the unevenness of the surface potential of the elastic layer.

In the chemical structural formula (1), l, m, and n each represent a positive integer, and may be identical to or different from one another. In the present invention, a vinyl group which the organopolysiloxane as the component (B) has at a terminal thereof undergoes an addition reaction with an Si-H group which the hydrogen polysiloxane as the component (C) to be described below has.

The molar amount of the vinyl groups of the organopolysiloxane as the component (B) is preferably 0.5 time or more and 4.0 times or less as large as the molar amount of the vinyl groups of the component (A). It is assumed that setting the molar amount within the range suppressed the crosslinking of the molecules of the component (A) or the component (B) through the component (C) during the curing, and hence enabled the formation of a molecular chain preferred for the suppression of the movement of the carbon black.

The viscosity of the organopolysiloxane as the component (B) at a temperature of 25°C is preferably set to 0.015 Pa·s or more and 0.030 Pa·s or less because the surface potential unevenness of the elastic layer 3 can be further suppressed. When the organopolysiloxane has such a low viscosity, its molecular weight can be estimated from Warrik's equation. The molecular weight in the viscosity range is about 1,500 or more and 3,000 or less. If l, m, and n in the chemical structural formula (1) adopt the same value, the value is about 5 or more and 12 or less. Setting the viscosity of the component (B) to 0.015 Pa·s or more suppresses excessive proximity of the vinyl groups in the same molecule of the component (B), and hence reduces the frequency at which the vinyl groups in the same molecule are bonded to each other through the hydrogen polysiloxane as the component (C). Probably as a result of the foregoing, bonding with the component (A) or the organopolysiloxane as the component (B) that was not the same molecule through the hydrogen polysiloxane as the component (C) was accelerated, and hence the molecular chain preferred for the suppression of the movement of the carbon black was able to be formed. Further, setting the viscosity to 0.030 Pa·s or less allows even the siloxane main chains each having high mobility to easily maintain their wide-angle spreading from the silicon atom of the SiO_{3/2} unit. Probably because of the foregoing, the molecular chain preferred for the suppression of the movement of the carbon black after the curing was able to be formed.

Further, the component (B) whose viscosity falls within such range, and the component (A) whose viscosity at a temperature of 25°C falls within the range of 10 Pa·s or more and 100 Pa·s or less are more preferably combined. Setting the viscosity of the component (A) to 10 Pa·s or more can additionally suppress the unevenness of the surface potential of the elastic layer 3 when the component is combined with the component (B) whose viscosity falls within the range. This may be because the carbon black tends to be stably present not only as primary particles but also as an aggregate in the surface of the cured substance of the electro-conductive silicone rubber mixture according to the present invention.

Further, setting the viscosity of the component (A) to 100 Pa·s or less provides a moderate crosslinking density and moderate elasticity. Thus, compatibility between the suppression of the unevenness of the surface potential and a small compression set or moderate hardness which the elastic layer of the electro-conductive member is required to have can be achieved, which is more preferred.

### <Component (C)>

The component (C) is a hydrogen polysiloxane having at least two hydrosilyl groups. The component (C) serves mainly as a crosslinking agent through an addition reaction between an Si-H group which the component has in a molecule thereof, and a vinyl group which each of the component (A) and the component (B) has. A hydrogen polysiloxane having, in a molecule thereof, three or more hydrosilyl groups is suitably used as the component (C) in order that the mixture may be efficiently crosslinked. Further, the component (C) having, in a molecule thereof, two hydrosilyl groups may be used as a chain extender for widening a space between molecular chains. A general formula (3) for the component (C) is shown below.

H_{b}(R²)_{c}SiO_{(4-b-c)/2} ··· (3)

It should be noted that in the general formula (3), R² represents an unsubstituted or substituted, monovalent hydrocarbon group free of any aliphatic, unsaturated carbon-carbon bond, b represents a positive number of 0.001 or more and 1.0 or less, c represents a positive number of 0.7 or more and 2.1 or less, and b+c represents a positive number of 0.8 or more and 3.0 or less. In addition, at least two hydrosilyl groups are needed in one molecule of the component.

Examples of R² include the same examples as those of R¹. In addition, by the same reason as that of R¹, a methyl group is preferred as an organic group.

Further, for example, a linear structure, a branched structure, and a cyclic structure, and a mixture thereof can each be used as the molecular structure of the hydrogen polysiloxane as the component (C) without any particular limitation.

The blending amount of the hydrogen polysiloxane as the component (C) is preferably determined so that a molar ratio (moles of Si-H groups/moles of vinyl groups) between its Si-H groups, and the vinyl groups which the component (A) and the organopolysiloxane as the component (B) have may be 1.0 or more and 5.0 or less. Setting the blending amount within the range reduces the amount of an unreacted product, and hence a cured substance showing a low level of bleedout as the exudation of an unreacted component and having a small compression set can be obtained.

The hydrogen polysiloxane as the component (C) preferably has a viscosity at a temperature of 25°C of 0.005 Pa·s or more and 1 Pa·s or less. Its molecular weight in the viscosity range is about 700 or more and 30,000 or less, and corresponds to a degree of polymerization of about 10 or more and 400 or less. The viscosity is preferably set to 0.005 Pa·s or more because the component can be a molecule stably having at least two Si-H groups. In addition, the viscosity is preferably set to 1 Pa·s or less because the component tends to be uniformly mixed with any other component.

### <Component (D)>

The carbon black to be used as the component (D) can be used without any particular limitation in consideration of its influences on the electro-conductivity, hardness, and compression set of the elastic layer. Examples thereof include acetylene black having high electro-conductivity, and furnace blacks such as SAF, ISAF, HAF, MAF, FEF, GPF, and SRF. In addition, carbon black to be added to an addition polymerization type silicone rubber mixture is preferably low-sulfur carbon black because the carbon black can suppress curing inhibition. The physical properties of the carbon black that affect the electro-conductivity of the silicone rubber mixture are, for example, a primary particle diameter and a DBP oil absorption.

Further, in the present invention, the unevenness of the surface potential of the elastic layer is additionally suppressed with ease by selecting a primary particle diameter and a structure that tend to be present in a space between molecular chains each formed of the component (A), the component (B), and the component (C).

In addition, an elastic layer having additionally excellent characteristics can be formed by taking the dispersibility of the carbon black in a polymer component and its reinforcing property into consideration. In view of the foregoing, for example, carbon black having an arithmetic average primary particle diameter of 10 nm or more and 100 nm or less, and having a DBP oil absorption (method A) of 30 cm³/100 g or more and 200 cm³/100 g or less can be suitably used. MT-grade carbon black or the like may also be mixed and used for the purpose of the stabilization of the resistance of the elastic layer. The content of the carbon black is preferably set to 1 mass% or more and 20 mass% or less with respect to the total amount of the component (A), the component (B), and the component (C), and the content more preferably falls within the range of 2 mass% or more and 10 mass% or less. Setting the content within the range can provide an elastic layer showing small surface potential unevenness in the construction of the present invention, and having moderate electro-conductivity and a small compression set.

The volume resistivity of the elastic layer 3 of the electro-conductive member is preferably set to 1×10⁴ Ω·cm or more and 1×10¹⁰ Ω·cm or less. Setting the volume resistivity of the elastic layer 3 within the range can facilitate the control of the amount of toner with which an image on a photosensitive member is developed.

### <Component (E)>

The silicone rubber mixture containing the component (A) to the component (D) is preferably blended with a catalyst for accelerating a hydrosilylation reaction between each of the component (A) and the component (B), and the component (C) (hereinafter, sometimes referred to as "component (E)"). A transition metal compound, in particular, a platinum compound can be suitably used as such catalyst. The catalyst is compulsory when the silicone rubber is cured by crosslinking based on an addition reaction. A simple substance of a platinum element, a platinum composite, a platinum compound such as chloroplatinic acid, an alcohol compound of chloroplatinic acid, a platinum-ketone complex, and a platinum-vinylsiloxane complex can be given as examples of the platinum compound. The content of the component (E) is appropriately determined from the viewpoint of a needed curing rate. In the construction of the present invention, the content is preferably set to fall within the range of 0.1 ppm or more and 1,000 ppm or less in terms of the amount of platinum in the component (E) with respect to the total weight of the component (A), the component (B), and the component (C) because a suitable curing rate is obtained.

In addition, the electro-conductive silicone rubber mixture of the present invention may contain a curing inhibitor in order that material stability at the time of long-term storage or workability at the time of the molding of the elastic layer 3 may be improved. Further, the mixture may contain a non-electro-conductive filler typified by an inorganic filler for the purpose of, for example, imparting the resistance stability or mechanical strength of the elastic layer. Further, the mixture of the present invention may be dissolved or dispersed in an organic solvent such as toluene or xylene as required. The component (A) and the component (B), and the component (C) in the present invention are preferably mixed in a separate manner in order that material stability when the mixture is uncured may be maintained. The components are preferably mixed with a static mixer or the like immediately before the curing.

### <Method of molding elastic layer>

As a method of molding the elastic layer 3 with the electro-conductive silicone rubber mixture of the present invention, there can be exemplified various molding methods each involving heating and curing the mixture at a proper temperature for a proper time period to mold the layer on the mandrel 2 such as extrusion molding, press molding, injection molding, liquid injection molding, and cast molding. The electro-conductive member is required to have high dimensional accuracy because its shape has an effect on image quality. Accordingly, out of the methods, a method involving injecting an uncured elastic layer material into a cylindrical mold in which the mandrel 2 has been placed, and heating and curing the material is preferred. With regard to the curing, the heating temperature and the heating time can be appropriately adjusted by selecting the kinds and amounts of the component (D) and curing inhibitor to be used. In addition, the elastic layer 3 after the molding may be secondarily heated as required for the purpose of, for example, reducing the amount of an unreacted product.

The elastic layer 3 mainly imparts elasticity which the electro-conductive member is required to have. Its hardness is preferably, for example, 10° or more and 80° or less in terms of Asker C hardness. Setting the Asker C hardness of the elastic layer 3 to 10° or more can reduce its compression set. In addition, setting the Asker C hardness of the elastic layer to 80° or less can suppress the stress to toner and can suppress the fusion of the toner to the electro-conductive member. Here, the Asker C hardness can be specified by a measured value obtained by the measurement of a test piece separately produced according to the Society of Rubber Industry, Japan Standard SRIS 0101 with an Asker rubber hardness meter Model C (manufactured by KOBUNSHI KEIKI CO., LTD.).

The thickness of the elastic layer according to the present invention is preferably set to 1 mm or more and 6 mm or less.

### <Mandrel 2>

The mandrel 2 as the substrate whose surface is electro-conductive according to the present invention is not particularly limited as long as its surface is electro-conductive, and a mandrel formed of a material appropriately selected from materials such as carbon steel, alloy steel and cast iron, and an electro-conductive resin can be used.

### <Surface layer 4>

The surface layer 4 is preferably a resin layer, and a material for the layer is, for example, a fluororesin, a polyamide resin, a melamine resin, a silicone resin, a urethane resin, or a mixture thereof.

A product obtained by adding, to any such resin, carbon black for the purpose of imparting electro-conductivity or reinforcing property can be used as the surface layer 4. The blending amount of the carbon black is preferably set to 3 mass% or more and 30 mass% or less with respect to the resin component. The surface layer is obtained by coating the elastic layer with a coating liquid prepared by mixing and dispersing the resin, the carbon black, and a solvent. Any solvent can be appropriately used as the solvent to be used in the coating liquid on condition that the resin to be used as the surface layer is soluble in the solvent.

The thickness of the surface layer 4 is preferably 4 µm or more and 50 µm or less. As long as the thickness is 4 µm or more, the wear of the layer at the time of its use can be suppressed. As long as the thickness is 50 µm or less, the stress to the toner caused by the surface hardness of the electro-conductive member can be suppressed.

The surface roughness of the surface layer 4, which is not particularly limited, can be appropriately adjusted before use for the purpose of securing a conveying force for the toner to provide a high-quality image. Effective means for controlling the surface roughness is to incorporate particles each having a desired particle diameter into the surface layer 4. Metal particles and resin particles each having a particle diameter of 0.1 µm or more and 30.0 µm or less can be used as the particles to be incorporated into the surface layer 4. Of those, resin particles that are rich in flexibility, have a relatively small specific gravity, and easily provide the stability of paint are more preferred. When the multiple surface layers 4 are formed, such particles may be incorporated into all the multiple layers, or the particles may be incorporated into at least one of the multiple layers.

In addition, the present invention is a process cartridge illustrated in FIG. 2 having at least the developing roller 1, a developing blade 21, and a toner container 20, the process cartridge being detachably mountable to a main body of an electrophotographic apparatus. Further, the present invention is an electrophotographic apparatus for forming a visible image on a photosensitive member by: forming a thin layer of toner on the surface of the developing roller; and bringing the developing roller into contact with the photosensitive member to supply the toner to the surface of the photosensitive member. The process cartridge can be an all-in-one process cartridge integrated with a photosensitive member 18, a cleaning blade 26, a waste toner-storing container 25, and a charging roller 24 like the process cartridge 17 illustrated in FIG. 2.

### <Process cartridge, electrophotographic apparatus>

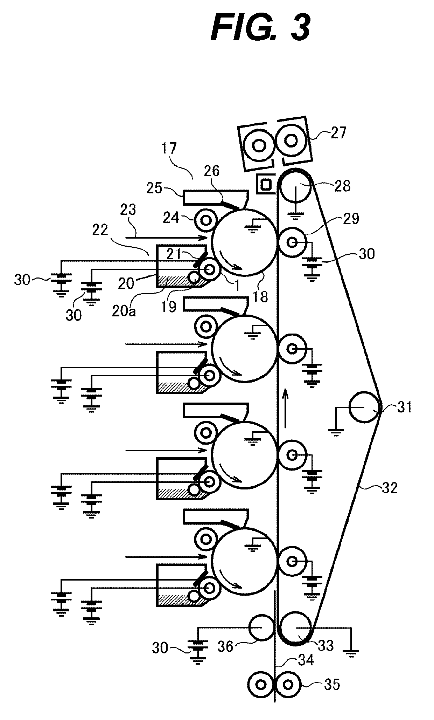

FIG. 3 is a sectional view illustrating the schematic construction of an electrophotographic apparatus using a process cartridge including the electro-conductive member of the present invention. In the electrophotographic apparatus of FIG. 3, a developing apparatus 22 formed of the developing roller 1, the toner-supplying roller 19, the toner container 20, and the developing blade 21; and a process cartridge 17 formed of the photosensitive member 18, the cleaning blade 26, the waste toner-storing container 25, and the charging roller 24 are detachably mountable. In addition, the photosensitive member 18, the cleaning blade 26, the waste toner-storing container 25, and the charging roller 24 may be deployed in the main body of the electrophotographic apparatus. The photosensitive member 18 rotates in the direction indicated by an arrow and is uniformly charged by the charging roller 24 for subjecting the photosensitive member 18 to a charging treatment, and an electrostatic latent image is formed on its surface by a laser light 23 as exposing unit for writing the electrostatic latent image on the photosensitive member 18. The electrostatic latent image is developed by being provided with a toner 20a from the developing apparatus 22 placed to contact the photosensitive member 18, and is then visualized as a toner image.

The development performed here is the so-called reversal development in which the toner image is formed on an exposing portion. The visualized toner image on the photosensitive member 18 is transferred onto a paper 34 as a recording medium by a transfer roller 29 as a transferring member. The paper 34 is fed into the apparatus via a sheet-feeding roller 35 and an adsorbing roller 36, and is then conveyed into a gap between the photosensitive member 18 and the transfer roller 29 by an endless belt-like transfer conveyance belt 32. The transfer conveyance belt 32 is operated by a driven roller 33, a driving roller 28, and a tension roller 31. A voltage is applied from a bias power source 30 to each of the transfer roller 29 and the adsorbing roller 36. The paper 34 onto which the toner image has been transferred is subjected to a fixation treatment by a fixing apparatus 27, and is then discharged to the outside of the apparatus. Thus, a printing operation is terminated.

Meanwhile, transfer residual toner remaining on the photosensitive member 18 without being used in the transfer is scraped by the cleaning blade 26 as a cleaning member for cleaning the surface of the photosensitive member, and is then stored in the waste toner-storing container 25. The photosensitive member 18 thus cleaned repeatedly performs the foregoing action. The developing apparatus 22 includes the toner container 20 storing the toner 20a as a one-component developer, and the developing roller 1 as a developer carrying member positioned at an opening portion extending in the longitudinal direction in the toner container 20 and placed to be opposite to the photosensitive member 18. The developing apparatus 22 is adapted to develop and visualize the electrostatic latent image on the photosensitive member 18.

In addition, a member obtained by fixing a rubber elastic body to a sheet metal made of a metal, or a member having spring property such as a thin plate of SUS or phosphor bronze or a member obtained by laminating a resin or a rubber on its surface is used as the developing blade 21. In addition, when a voltage higher than a voltage to be applied the developing roller 1 is applied to the developing blade 21, a toner layer on the developing roller can be controlled. To this end, a thin plate of SUS or phosphor bronze is preferably used as the developing blade 21. A voltage is applied from the bias power source 30 to each of the developing roller 1 and the developing blade 21. The voltage to be applied to the developing blade 21 is preferably a voltage whose absolute value is larger than that of the voltage to be applied to the developing roller 1 by 100 V to 300 V.

A developing process in the developing apparatus 22 is described below. Toner is applied onto the developing roller 1 by the toner-supplying roller 19 that is rotatably supported. The toner applied onto the developing roller 1 is rubbed with the developing blade 21 by the rotation of the developing roller 1. Here, the top of the developing roller 1 is uniformly coated with the toner on the developing roller 1 by a bias applied to the developing blade 21. The developing roller 1 contacts the photosensitive member 18 while rotating, and then develops an electrostatic latent image formed on the photosensitive member 18 with the toner with which the top of the developing roller 1 has been coated. Thus, an image is formed.

The structure of the toner-supplying roller 19 is preferably a foamed skeleton-like sponge structure or a fur brush structure obtained by filling fibers of rayon, polyamide, or the like onto a mandrel in terms of the supply of the toner 20a to the developing roller 1 and the stripping of undeveloped toner. In the example, an elastic roller obtained by providing a polyurethane foam around a mandrel was used. The abutting width of the toner-supplying roller 19 with respect to the developing roller 1 is, for example, 1 mm or more and 8 mm or less. In addition, the developing roller 1 is preferably provided with a relative speed at the abutting portion.

### Example

Hereinafter, the electro-conductive member, process cartridge, and electrophotographic apparatus of the present invention are specifically described in detail. Hereinafter, the term "part(s)" refers to part(s) by mass.

Experimental Example I Production and evaluation of elastic roller

### <Material to be used in formation of elastic layer>

### (Component (A))

A linear dimethylpolysiloxane in which both terminals of the molecular chain were capped with dimethylvinylsilyl groups, the linear dimethylpolysiloxane having a viscosity and a vinyl group equivalent shown in Table 1, was used as the component (A).

[Table 1]

**Table 1**

| | |
|---|---|
| A-1 | Viscosity: 40.0 Pa·s, vinyl group equivalent: 0.025 mmol/g |
| A-2 | Viscosity: 5 Pa·s, vinyl group equivalent: 0.040 mmol/g |
| A-3 | Viscosity: 150 Pa·s, vinyl group equivalent: 0.017 mmol/g |
| A-4 | Viscosity: 300 Pa·s, vinyl group equivalent: 0.015 mmol/g |
| A-5 | Viscosity: 100 Pa·s, vinyl group equivalent: 0.020 mmol/g |
| A-6 | Viscosity: 10 Pa·s, vinyl group equivalent: 0.033 mmol/g |

### (Component (B))

An organopolysiloxane having a viscosity and a vinyl group equivalent shown in Table 2 was used as the component (B).

[Table 2]

**Table 2**

| | |
|---|---|
| B-1 | Organopolysiloxane represented by the chemical structural formula (1) having a viscosity of 0.030 Pa·s and a vinyl group equivalent of 1.0 mmol/g (when 1, m, and n in the chemical structural formula (1) are set to the same value, the value corresponds to 12) (trade name: MTV-112, manufactured by Gelest, Inc.) |
| B-2 | Organopolysiloxane represented by the chemical structural formula (1) having a viscosity of 0.015 Pa·s and a vinyl group equivalent of 2.0 mmol/g (when 1, m, and n in the chemical structural formula (1) are set to the same value, the value corresponds to 5) (trade name: MTV-112, manufactured by Gelest, Inc.) |
| B-3 | Organopolysiloxane represented by the following chemical structural formula (4) having a viscosity of 0.007 Pa·s and a vinyl group equivalent of 1.1 mmol/g (when l', m', and n' in the chemical structural formula (4) are set to the same value, the value corresponds to 3) (trade name: VTT-106, manufactured by Gelest, Inc.) |

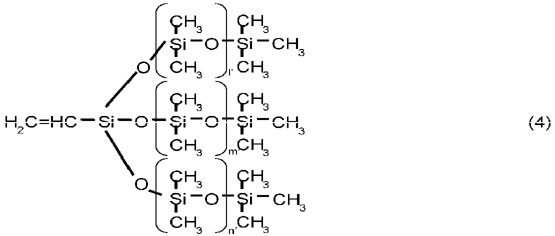

l', m', and n' in the chemical structural formula (4) each represent a positive integer.

### (Component (C))

Used as the component (C) was a copolymer (C-1) of methylhydrosiloxane and dimethylsiloxane having a viscosity of 0.020 Pa·s and an equivalent of hydrogen atoms bonded to silicon atoms of 8.8 mmol/g, and having a hydrogen atom bonded to a silicon atom somewhere along its molecular chain.

### (Component (D))

A carbon black shown in Table 3 was used as the component (D).

[Table 3]

**Table 3**

| | |
|---|---|
| D-1 | MA600 (trade name, manufactured by Mitsubishi Chemical Corporation), average primary particle diameter: 20 nm, DBP oil absorption: 115 ml/100 g |
| D-2 | SUNBLACK 235 (trade name, manufactured by ASAHI CARBON CO., LTD.), average primary particle diameter: 78 nm, DBP oil absorption: 49 ml/100 g |

### (Component (E))

A platinum catalyst (E-1) having a Pt concentration of 2% was used as the component (E).

### (Example 1)

### <Production of elastic roller>

First, materials shown in Table 4 were kneaded with a kneader to produce a kneaded product.

[Table 4]

**Table 4**

| | |
|---|---|
| Organopolysiloxane (A-1) as component (A) | 100 parts |
| Organopolysiloxane (B-1) as component (B) | 1.3 parts |

After that, D-1 was added as the component (D) so that its amount was 5 parts with respect to 100 parts of the total amount of the components (A) and (B), and the component (C) shown in Table 5, followed by dispersion with a double roll mill. Next, materials shown in Table 5 were kneaded with a double roll mill to produce a kneaded product.

[Table 5]

**Table 5**

| | |
|---|---|
| C-1 as component (C) | 2.3 parts (such an amount that the number of Si-H groups is 4 times as large as that of vinyl groups) |
| E-1 as component (E) | 0.1 part with respect to 100 parts of the total amount of the components (A), (B), and (C) |
| Silylated silica as reinforcing material (trade name: AEROSIL RX200, manufactured by Nippon Aerosil Co., Ltd.) | 3 parts |

The two kinds of kneaded products were further kneaded with a planetary mixer. Thus, an uncured electro-conductive silicone rubber mixture was obtained.

Next, a mandrel made of stainless steel (SUS304) having a diameter of 6.0 mm was prepared as a mandrel 2. A primer (trade name: DY35-051, manufactured by Dow Corning Toray Co., Ltd.) was applied to the peripheral surface of the mandrel 2, and was then baked at a temperature of 150°C for 30 minutes.

The mandrel 2 was placed in a cylindrical mold and then the uncured electro-conductive silicone rubber mixture was injected into the mold (cavity). Subsequently, the mold was heated at a temperature of 150°C for 15 minutes and then cooled, followed by the removal of the resultant from the mold. After that, a curing reaction was completed by heating the resultant at a temperature of 180°C for 1 hour. Thus, the elastic layer 3 was formed. An elastic roller thus obtained had a diameter of 12.0 mm and the elastic layer 3 had a length in its longitudinal direction of 240 mm.

In addition, the Asker C hardness of the elastic layer of the elastic roller of this example was measured with an Asker rubber hardness meter Model C (trade name, manufactured by KOBUNSHI KEIKI CO., LTD.). In addition, surface potential unevenness in each of the circumferential direction and longitudinal direction of the elastic layer was measured by the following method. Table 6 shows the results.

### <Method of measuring surface potential>

Residual charge on the elastic layer 3 can be evaluated by measuring a residual potential on the surface of a material charged by corona charging (hereinafter, referred to as "surface potential").

A dielectric relaxation analyzer (trade name: DRA-2000L, manufactured by Quality Engineering Associates, Inc.) was used in the measurement of surface potential unevenness. The analyzer is constituted of a scanner and a non-contact electrostatic potentiometer or the like, and can measure a surface potential at an arbitrary position of the surface of the roller by scanning the roller with a carriage in which a corona charger and an electrostatic probe have been included in its axial direction. The surface potential to be measured here refers to a residual potential on the surface of the roller measured with the probe positioned rearward with respect to the travelling direction of the charger after the charging with the charger. The measurement was performed at 240 points at an interval of 1 mm in the longitudinal direction of the elastic layer 3 and at 36 points at an interval of 10° in its circumferential direction, i.e., a total of 8,640 points. A distance between the elastic layer 3 and the probe was set to 0.76 mm, the scanning speed of the carriage was set to 400 mm/s, and a voltage to be applied to the corona charger was set to 6 kV.

### <Evaluation of surface potential unevenness>

Surface potential unevenness was evaluated as described below. First, the electro-conductive member was evaluated for its surface potential unevenness in separate terms of unevenness in its circumferential direction and unevenness in its longitudinal direction based on data measured at the 8,640 points according to the method of measuring a surface potential.

With regard to the circumferential direction, the average of the measured values at all points (4 points×240 points=960 points) in the longitudinal direction in a width (4-mm width) corresponding to 4 points out of the 36 points measured in the circumferential direction was calculated. That is, the average of the surface potentials in each of 9 sections obtained by dividing the electro-conductive member in the circumferential direction was obtained. The maximum out of the absolute values for differences between the 9 averages of the surface potentials was defined as the surface potential unevenness in the circumferential direction of the electro-conductive member.

With regard to the longitudinal direction, the average of the measured values at all points (36 points×20 points=720 points) in the circumferential direction in a width (20-mm width) corresponding to 20 points out of the 240 points measured in the longitudinal direction was calculated. That is, the average of the surface potentials in each of 12 sections obtained by dividing the electro-conductive member in the longitudinal direction was obtained. The maximum out of the absolute values for differences between the 12 averages of the surface potentials was defined as the surface potential unevenness in the longitudinal direction of the electro-conductive member. Those widths with respect to the circumferential direction and the longitudinal direction are each such a width that when an image is output by using the electro-conductive member in which surface potential unevenness is present as a charging roller, the unevenness is liable to be identified as the light and shade unevenness of the image.

### (Examples 2 to 12)

Elastic rollers of Examples 2 to 12 were each produced in the same manner as in Example 1 except that the component (A) to component (E) in Example 1 were changed as shown in Table 6. The same evaluation as that of Example 1 was performed. Table 6 shows the results.

### (Comparative Examples 1 to 4)

Elastic rollers of Comparative Examples 1 to 4 were each produced in the same manner as in Example 1 except that the component (A) to component (E) in Example 1 were changed as shown in Table 6. The same evaluation as that of Example 1 was performed. Table 6 shows the results.

[Table 6]

**Table 6**

| | | Component (A) | | Component (B) | | Component (C) | | Component (D) | | Component (E) | | Surface potential unevenness (V) | | Asker C hardness (°) |
|---|---|---|---|---|---|---|---|---|---|---|---|---|---|---|
| | | No. | Number of parts | No. | Number of parts | No. | Number of parts | No. | *Number of parts | No. | *Number of parts | Circumferential direction | Longitudinal direction | |
| | 1 | A-1 | 100 | | 2.5 | | 2.3 | D-1 | 5 | | | 0.5 | 0.6 | 55 |
| | 2 | | | | 1.3 | | 1.7 | | | | | 0.7 | 1.9 | 54 |
| | 3 | | | | 10.0 | | 5.7 | | | | | 1.7 | 0.5 | 59 |
| | 4 | | | | 2.5 | | 2.3 | | 2 | | | 0.8 | 1.0 | 53 |
| | 5 | | | | | | | | 10 | | | 0.5 | 0.5 | 58 |
| Example | 6 | | | B-1 | | C-1 | | D-2 | 10 | E-1 | 0.1 | 1.5 | 0.7 | 56 |
| | 7 | A-2 | 63 | | | | | D-1 | 5 | | | 3.2 | 1.3 | 60 |
| | 8 | A-3 | 147 | | | | | | | | | 0.4 | 0.7 | 52 |
| | 9 | A-4 | 100 | | 3.0 | | 2.0 | | | | | 0.3 | 0.9 | 51 |
| | 10 | A-5 | 76 | | | | | | | | | 1.7 | 0.5 | 56 |
| | 11 | A-6 | 125 | | 2.5 | | 2.3 | | | | | 0.3 | 0.5 | 58 |
| | 12 | A-1 | 100 | B-2 | 1.3 | | | | | | | 0.4 | 0.9 | 56 |
| Comparative Example | 1 | - | 0 | B-1 | 100 | C-1 | 45.3 | D-1 | 5 | E-1 | 0.1 | 15.5 | 14.9 | 85 |
| | 2 | A-1 | 100 | B-3 | 2.3 | | 2.3 | | | | | 8.9 | 10.4 | 50 |
| | 3 | | | - | 0 | | 1.1 | | | | | 7.9 | 12.5 | 53 |
| | 4 | A-4 | | | | | 0.7 | | | | | 7.1 | 9.6 | 49 |

| | | | | | | | | | | | | | | |
|---|---|---|---|---|---|---|---|---|---|---|---|---|---|---|
| *: The number of parts with respect to 100 parts by mass of the total amount of the components (A), (B), and (C) | | | | | | | | | | | | | | |

### Experimental Example II

### (Example 13)

### <Production of developing roller>

Next, prior to the use of the elastic roller according to Example 1 as a developing roller, a surface layer containing a urethane resin was formed on the surface of each elastic roller in order for toner conveyability to be secured. That is, materials shown in Table 7 below were weighed and then MEK was added to the materials, followed by dispersion with a bead mill. Thus, a coating liquid for forming the surface layer was obtained.

[Table 7]

**Table 7**

| | |
|---|---|
| Polyol (trade name: N5120, manufactured by Nippon Polyurethane Industry Co., Ltd.) | 87 parts |
| Isocyanate (trade name: L-55E, manufactured by Nippon Polyurethane Industry Co., Ltd.) | 13 parts |
| Carbon black (trade name: MA77, manufactured by Mitsubishi Chemical Corporation) | 20 parts |
| Acrylic particles (trade name: G-800 TRANSPARENT, manufactured by Negami Chemical Industrial Co., Ltd.) | 50 parts |

Subsequently, the coating liquid for forming the surface layer was charged into an overflow type circulating application apparatus. The elastic roller according to Example 1 was immersed in the application apparatus and then pulled up. After that, the surface layer formed of a urethane resin was formed by air-drying the resultant for 60 minutes and then heating the resultant at a temperature of 160°C for 5 hours. Thus, a developing roller according to Example 13 was produced. It should be noted that the thickness of the surface layer 4 was 10 µm.

### <Image output evaluation>

Subsequently, an electrophotographic image was produced with the developing roller of this example. Then, the resultant electrophotographic image was visually observed and evaluated for the presence or absence of an image defect resulting from the developing roller, and when the image defect was observed, for the degree of the defect. Hereinafter, a method of forming an image for evaluation and evaluation methods are specifically described.

### (Outline of reconstructed machine of laser printer)

A laser printer for image evaluation is obtained by reconstructing a laser printer (trade name: HP Color LaserJet CP4525dn Printer, manufactured by Hewlett-Packard Company) so that the printer can output recording media at a speed of 60 ppm. The reconstruction was performed by appropriately regulating the settings of a high-voltage power source, the gear of a motor, and a sheet-conveying speed.

### (Evaluation for light and shade of image resulting from surface potential unevenness)

The developing roller of Example 13 was incorporated into an unused process cartridge (trade name: CE260X, manufactured by Hewlett-Packard Company, color: black). It should be noted that the position at which the developing blade of the process cartridge was fixed was changed and the amount of toner carried on the developing roller was regulated to 0.50 mg/cm². In addition, an abutting pressure between the developing roller and the developing blade at this time is 30 gf/cm².

Next, the process cartridge was left at rest in an environment having a temperature of 15°C and a humidity of 10%RH for 48 hours. After that, the process cartridge was loaded into the reconstructed machine of the laser printer and then 2,000 electrophotographic images were continuously output in the same environment. It should be noted that the output electrophotographic images are each obtained by forming an alphabetical letter "E" having a size of 4 points on A4 size paper at a print percentage of 1%.

Here, when the developing roller has surface potential unevenness, counter charge from the toner due to repeated development or a bias applied to the developing blade remains on the developing roller while having unevenness, and the residual charge appears as the light and shade of an image because the residual charge serves as apparent unevenness of a developing bias. The light and shade were evaluated by criteria shown in Table 8. Table 10 shows the result in the developing roller of this example.

In addition, Table 10 shows the larger value out of the surface potential unevennesses in the circumferential direction and longitudinal direction of the elastic roller 1 shown in Table 6 as well. Whether the occurring light and shade of the image are derived from the surface potential unevenness can be judged by checking the mapping of the measured value for the surface potential unevenness against the image.

[Table 8]

**Table 8**

| | Halftone image | Surface potential unevennesses in circumferential direction and longitudinal direction |
|---|---|---|
| A | No light and shade of the image derived from the surface potential unevenness are observed. | Both the unevennesses are less than 1 V. |
| B | The light and shade of the image derived from the surface potential unevenness are observed to an extremely slight extent. | One of the unevennesses is 1 V or more and less than 3 V. |
| C | The light and shade of the image derived from the surface potential unevenness are observed. | One of the unevennesses is 3 V or more and less than 5 V. |
| D | Significant light and shade of the image derived from the surface potential unevenness are observed. | One of the unevennesses is 5 V or more. |

### (Image evaluation for streak after long-term storage under high-temperature, high-humidity environment)

The developing roller of this example was incorporated into an unused process cartridge (trade name: CE260X, manufactured by Hewlett-Packard Company, color: black) after the position at which its developing blade was fixed had been changed as described above. The electrophotographic process cartridge was left at rest in an environment having a temperature of 40°C and a humidity of 95%RH for 30 days. After that, the process cartridge was further left at rest in an environment having a temperature of 23°C and a humidity of 50%RH for 24 hours.

After that, the process cartridge was loaded into the reconstructed machine of the laser printer and then 10 halftone images were output in the same environment.

Immediately after the output of the halftone images and the image evaluation, the amount of deformation of a recess in the surface of the developing roller appearing at its abutting position with the developing blade was measured and used as an indicator for the compression set of the developing roller. The amount of deformation of the surface of the developing roller was measured with a laser displacement sensor (trade name: LT-9500V, manufactured by KEYENCE CORPORATION). The amount of deformation was measured by: placing the laser displacement sensor in a direction perpendicular to the surface of the developing roller from which the toner had been removed by airblowing; rotationally driving the developing roller at an arbitrary number of revolutions; and reading a displacement in the circumferential direction of the surface of the developing roller. The measurement was performed at 5 points at a pitch of 43 mm in the longitudinal direction and the average of the 5 measured values was defined as the amount of deformation. Then, an image failure derived from the deformation of the developing roller was evaluated by evaluation conditions shown in Table 9 based on the image evaluation and the amount of deformation of the roller. Table 10 shows the result in the developing roller of this example.

### (Examples 14 to 24)

Developing rollers of Examples 14 to 24 were each produced in the same manner as in Example 13 except that the elastic roller of Example 1 used in Example 13 was changed to any one of the respective elastic rollers of Examples 2 to 12, and were then evaluated in the same manner as in Example 13.

### (Comparative Examples 5 to 8)

Developing rollers of Comparative Examples 5 to 8 were each produced in the same manner as in Example 13 except that the elastic roller of Example 1 used in Example 13 was changed to any one of the respective elastic rollers of Comparative Examples 1 to 4, and were then evaluated in the same manner as in Example 13.

[Table 9]

**Table 9**

| | Halftone image | Amount of deformation |
|---|---|---|
| A | No streak-like image failure derived from the deformation of the roller is observed. | The amount of deformation of the surface of the developing roller is less than 1 µm. |
| B | A streak-like image failure derived from the deformation of the roller is observed to an extremely slight extent. | The amount of deformation of the surface of the developing roller at a position corresponding to a streak is 1 µm or more and less than 3 µm. |
| C | A streak-like image failure derived from the deformation of the roller is slightly observed. | The amount of deformation of the surface of the developing roller at a position corresponding to a streak is 3 µm or more and less than 6 µm. |
| D | A streak-like image failure derived from the deformation of the roller is observed. | The amount of deformation of the surface of the developing roller at a position corresponding to a streak is 6 µm or more. |

[Table 10]

**Table 10**

| Example | Surface potential unevenness (V) | Light and shade of image | Amount of deformation (µm) | Streak |
|---|---|---|---|---|
| 13 | 0.6 | A | 0.9 | A |
| 14 | 1.9 | B | 2.3 | B |
| 15 | 1.7 | B | 0.5 | A |
| 16 | 1.0 | B | 0.6 | A |
| 17 | 0.5 | A | 1.2 | B |
| 18 | 1.5 | B | 0.7 | A |
| 19 | 3.2 | C | 0.3 | A |
| 20 | 0.7 | A | 3.5 | C |
| 21 | 0.9 | A | 5.0 | C |
| 22 | 1.7 | B | 0.5 | A |
| 23 | 0.5 | A | 2.2 | B |
| 24 | 0.9 | A | 0.8 | A |

[Table 11]

**Table 11**

| Comparative Example | Surface potential unevenness (V) | Light and shade of image | Amount of deformation (µm) | Streak |
|---|---|---|---|---|
| 5 | 15.5 | D | 0.3 | A |
| 6 | 10.4 | D | 5.2 | C |
| 7 | 12.5 | D | 2.7 | B |
| 8 | 9.6 | D | 6.2 | D |

As is apparent from Table 10 and Table 11, in the developing roller according to the present invention, the suppression of the surface potential unevenness, the light and shade of an image resulting therefrom, and the streak in association with the deformation of the roller at the time of its long-term storage under a high-temperature, high-humidity environment have been simultaneously achieved.

The elastic layer of the developing roller of Comparative Example 5 showed large surface potential unevenness, and the light and shade of an image were exacerbated upon performance of the image evaluation with the developing roller. This may be because of the following reason. The developing roller of Comparative Example 5 did not contain the component (A) and hence was not of a structure capable of suppressing the movement of the carbon black between the molecular chains of the composition upon curing of the elastic layer, with the result that the carbon black could not be uniformly present.

The elastic layer of the developing roller of Comparative Example 6 showed large surface potential unevenness, and the light and shade of an image were exacerbated upon performance of the image evaluation with the developing roller. This may be because B-3 used in Comparative Example 6 has the silicon atom of an SiO_{3/2} unit but none of the molecular chains branching off the atom has a vinyl group at its tip. It is assumed that when none of the molecular chains branching off the silicon atom of the SiO_{3/2} unit had a vinyl group at its tip, a crosslinked structure in which the component (A) and the component (C) were linked while spreading was not formed, and hence the carbon black could not be uniformly present.

The elastic layer of the developing roller of Comparative Example 7 showed large surface potential unevenness, and the light and shade of an image were exacerbated upon performance of the image evaluation with the developing roller. This may be because of the following reason. The developing roller of Comparative Example 7 did not contain the component (B), and hence a crosslinked structure in which the component (A) and the component (C) were linked while spreading was not formed, with the result that the carbon black could not be uniformly present.

Only A-4 having a large viscosity, i.e., a large molecular weight was used as an organopolysiloxane in the formation of the elastic layer of the elastic roller of Comparative Example 4 used in the production of the developing roller of Comparative Example 8.

The elastic layer of the developing roller of Comparative Example 8 showed large surface potential unevenness, and the light and shade of an image were exacerbated upon performance of the image evaluation with the developing roller. In addition, the amount of deformation of the roller at the time of its long-term standing under the high-temperature, high-humidity environment was large, and a streak was exacerbated upon performance of the image evaluation. It is assumed that even when an organopolysiloxane having a large molecular weight was used to provide a long molecular chain like Comparative Example 8, the movement of the carbon black could not be suppressed and hence the carbon black could not be uniformly present. Further, it is assumed that the absence of the component (B) as well as the large molecular weight reduced the crosslinking density of the composition to increase the compression set and hence the streak was exacerbated.

It is apparent from the foregoing that adopting the construction in the present invention was able to achieve compatibility between the suppression of the surface potential unevenness and the suppression of the deformation of the roller at the time of its long-term storage under the high-temperature, high-humidity environment.

### Reference Signs List

1 developing roller, 2 mandrel, 3 elastic layer, 4 surface layer

## Claims

1. An electro-conductive member, comprising:
a substrate having an electro-conductive surface; and
an electro-conductive elastic layer provided thereon,
wherein
the elastic layer is obtained by curing a mixture containing the following (A) to (D):
(A) an organopolysiloxane having two vinyl groups bonded to a silicon atom;
(B) an organopolysiloxane represented by the following chemical structural formula (1): 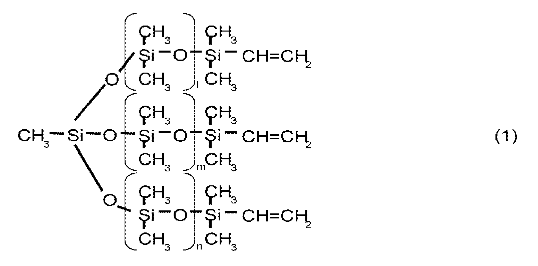 l, m, and n in the chemical structural formula (1) each independently represent a positive integer;
(C) a hydrogen polysiloxane having at least two hydrosilyl groups; and
(D) carbon black.

2. The electro-conductive member according to claim 1, wherein the component (A) has a viscosity at a temperature of 25°C of 10 Pa·s or more and 100 Pa·s or less, and the component (B) has a viscosity at a temperature of 25°C of 0.015 Pa·s or more and 0.030 Pa·s or less.

3. The electro-conductive member according to claim 1 or 2, wherein
the component (A) is a linear dimethylpolysiloxane in which both terminals of the molecular chain are capped with dimethylvinylsilyl groups.

4. The electro-conductive member according to any one of claims 1 to 3, further comprising a surface layer provided on the elastic layer, wherein the surface layer contains a urethane resin.

5. A process cartridge, comprising at least a developing roller, a developing blade, and a toner container,
wherein:
the developing roller comprises the electro-conductive member according to any one of claims 1 to 4; and
the process cartridge is detachably mountable to a main body of an electrophotographic apparatus.

6. An electrophotographic apparatus, comprising:
a photosensitive member; and
a developing roller placed to abut on the photosensitive member,
wherein the developing roller comprises the electro-conductive member according to any one of claims 1 to 4.

## Patentansprüche

1. Elektrisch leitfähiges Element, das umfasst:
ein Substrat mit einer elektrisch leitfähigen Oberfläche; und
eine darauf vorgesehene elektrisch leitfähige elastische Schicht,
wobei
die elastische Schicht durch Härten einer Mischung enthalten ist, die die folgenden (A) bis (D) enthält:
(A) ein Organopolysiloxan mit zwei Vinylgruppen, die an ein Siliziumatom gebunden sind;
(B) ein Organopolysiloxan, das durch die folgende chemische Strukturformel (1) dargestellt ist: 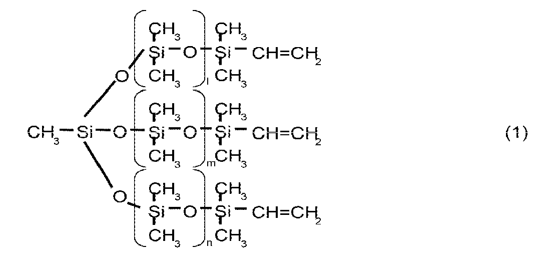 l, m und n in der chemischen Strukturformel (1) stellen jeweils unabhängig eine positive ganze Zahl dar;
(C) ein Wasserstoffpolysiloxan mit zumindest zwei Hydrosilylgruppen; und
(D) Kohleschwarz.

2. Elektrisch leitfähiges Element nach Anspruch 1, wobei der Bestandteil (A) eine Viskosität bei einer Temperatur von 25°C von 10 Pa·s oder mehr und 100 Pa·s oder weniger aufweist, und der Bestandteil (B) eine Viskosität bei einer Temperatur von 25°C von 0,015 Pa·s oder mehr und 0,030 Pa·s oder weniger aufweist.

3. Elektrisch leitfähiges Element nach Anspruch 1 oder 2, wobei
der Bestandteil (A) ein lineares Dimethlypolysiloxan ist, bei welchem beide Enden der Molekülkette mit Dimethylvinylsilylgruppen gecapped sind.

4. Elektrisch leitfähiges Element nach einem der Ansprüche 1 bis 3, das ferner eine Oberflächenschicht, die auf der elastischen Schicht vorgesehen ist, umfasst, wobei die Oberflächenschicht ein Urethanharz enthält.

5. Prozesskartusche, die umfasst
zumindest eine Entwicklerwalze, ein Entwicklerklinge, und einen Tonerbehälter,
wobei:
die Entwicklerwalze das elektrisch leitfähige Element nach einem der Ansprüche 1 bis 4 umfasst; und
die Prozesskartusche abnehmbar an einen Hauptkörper eines elektrophotographischen Apparats montierbar ist.

6. Elektrophotographischer Apparat, der umfasst:
ein photosensitives Element; und
eine Entwicklerwalze, die so platziert ist, dass sie auf dem photosensitiven Element angrenzt,
wobei die Entwicklerwalze das elektrisch leitfähige Element nach einem der Ansprüche 1 bis 4 umfasst.

## Revendications

1. Elément électroconducteur, comprenant :
un substrat ayant une surface électroconductrice ; et
une couche élastique électroconductrice fournie sur celle-ci,
dans lequel
la couche élastique est obtenue par durcissement d'un mélange contenant les constituants (A) à (D) suivants :
(A) un organopolysiloxane ayant deux groupes vinyle liés à un atome de silicium ;
(B) un organopolysiloxane représenté par la formule structurale chimique (1) suivante : 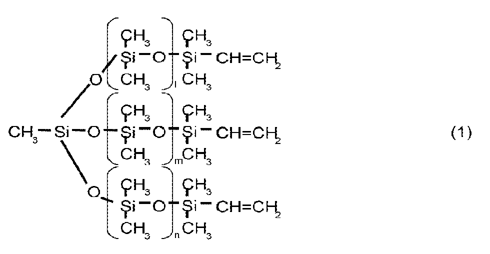 l, m et n dans la formule structurale chimique (1) représentent chacun indépendamment un nombre entier positif ;
(C) un hydrogéno-polysiloxane ayant au moins deux groupes hydrosilyle ; et
(D) du noir de carbone.

2. Elément électroconducteur suivant la revendication 1, dans lequel le constituant (A) a une viscosité à une température de 25°C de 10 Pa.s ou plus à 100 Pa.s ou moins, et le constituant (B) a une viscosité à une température de 25°C de 0,015 Pa.s ou plus à 0,030 Pa.s ou moins.

3. Elément électroconducteur suivant la revendication 1 ou 2,
dans lequel le constituant (A) est un diméthylpolysiloxane linéaire dans lequel les deux extrémités de la chaîne moléculaire sont coiffées avec des groupes diméthylvinylsilyle.

4. Elément électroconducteur suivant l'une quelconque des revendications 1 à 3, comprenant en outre une couche de surface fournie sur la couche élastique, dans lequel la couche de surface contient une résine d'uréthanne.

5. Cartouche de traitement, comprenant
au moins un rouleau de développement, une lame de développement et un récipient de toner,
dans laquelle :
le rouleau de développement comprend l'élément électroconducteur suivant l'une quelconque des revendications 1 à 4 ; et
la cartouche de traitement pouvant être montée de manière amovible dans le corps principal d'un appareil électrophotographique.

6. Appareil électrophotographique, comprenant :
un élément photosensible ; et
un rouleau de développement placé en appui sur l'élément photosensible,
dans lequel le rouleau de développement comprend l'élément électroconducteur suivant l'une quelconque des revendications 1 à 4.
